# EUROPEAN PATENT APPLICATION

(11) **EP 2 804 127 A1**
(43) Date of publication of application: **19.11.2014**
(21) Application number: 13168144.7
(22) Date of filing: 16.05.2013
(51) Int. Cl.: G06K 7/00

(54) **A Near Field Communication Technology Type B Reader Device And A Reader Implemented Method Of Resolving Multiple NFC B Listen Devices**

(71) Applicant: ST-Ericsson SA, 1228 Plan-les-Ouates (CH)
(72) Inventor: Hussain, Jafer, 669597 Singapore (SG)
(74) Representative: Kemp, Paul Geoffrey

(57) **Abstract**

An NFC reader is embodied in a mobile phone (200) and adapted to implement a tag/PICS/ listen device resolution method by an NFC resolution sub-system (207). In accordance with the method reader slot controller (204) starts the resolution process by setting only one time slot in a first poll response signal resolution cycle. Consequently all the tags (D1-D4) receiving a poll request signal from the reader (200) send the poll response signal in the one available time slot causing a collision if there is more than one NFC-B tag in range. The method then increases the number of time slots (N) to be deployed in a next resolution cycle. A collision counter (205) counts the number of time slots in each collision cycle in which a collision is detected. A calculator then calculates a new number of time slots (N) to deploy in a subsequent collision resolution cycle. The calculation is N=2^{Noc} where NoC is the counted number of collisions. Thus the number of time slots can both increase and decrease.

The method enables the resolution of the last unresolved tag in range to be determined at the end of any resolution cycle in which no collisions are detected.

## Description

### Technical field

The present invention relates to near field communication (abbreviated to NFC). In NFC a device acting as a reader acquires data from a listen device. The detailed characteristics of NFC devices and processes are generally defined in the standards and specifications of the NFC Forum and in international standards such as ISO 14443. However, in general the range of the RF poll signal is limited to not more than 10cm and a frequency of 13.56MHz.

NFC devices have a range of technology types which suit various functions, for example type NFC-B. It is necessary for the reader device to determine the type and identity of each listen device targeted in the RF field for information to be communicated. Broadly, the resolving process steps consist of: the reader generates an RF signal then a poll signal; the listen device is activated by the RF field; the listen device emits a poll response signal in reaction to the poll request signal. The poll request signal is exclusive to NFC-B technology listen devices. The poll request signal is received by the listen device. A cleanly received poll response signal includes a unique identification (NFCID0) of the transmitting NFC-B listen device which enables the read device to resolve each identified NFC-B listen device.

### Background art

NFC read devices may be stand-alone devices exemplified by access control turnstiles or devices to receive payment from NFC enabled credit or debit cards. Recently mobile devices such as mobile phones (cell-phones), tablets, personal digital assistants and other similar "smart" devices have been provided with the components and programs to be NFC enabled. Such NFC enabled smart devices can act as an NFC reader to acquire data from an NFC listen device.

NFC Listen devices are often devices such as tickets, debit/credit cards or key cards. NFC enabled smart devices are also provided with the hardware and software to emulate an NFC listen device and, commonly more than one NFC listen device. There is increasing demand for smart NFC enabled devices, especially mobile phones, to provide multiple NFC listen device functions or tags, for example: a, or several door key cards, a or several travel passes and a or several different credit cards. Two or more of the tags may use the same technology, particularly NFC-B technology.

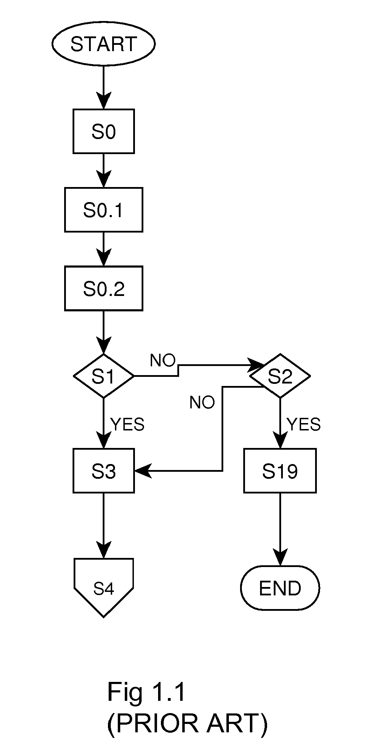

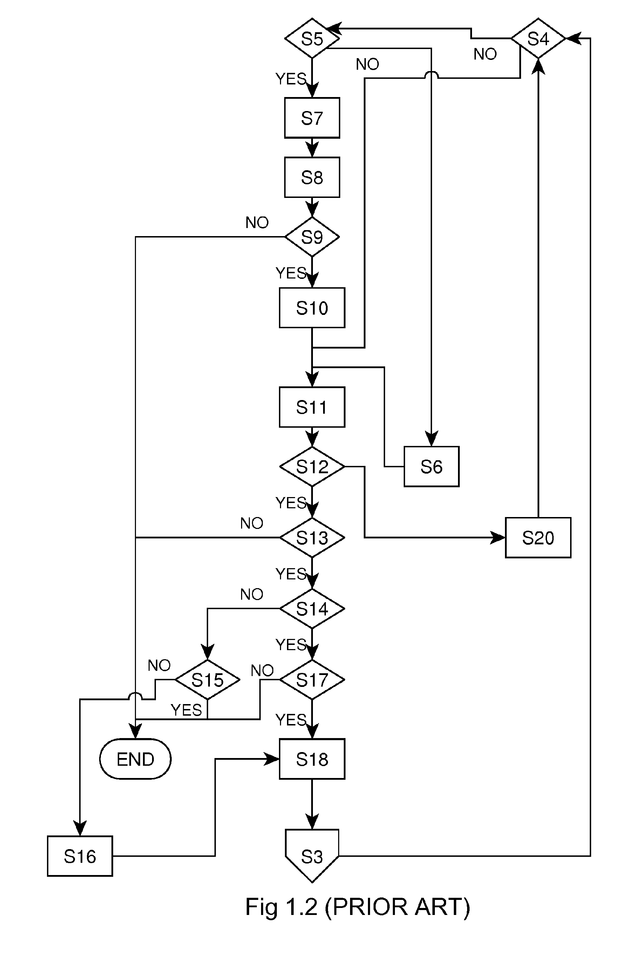

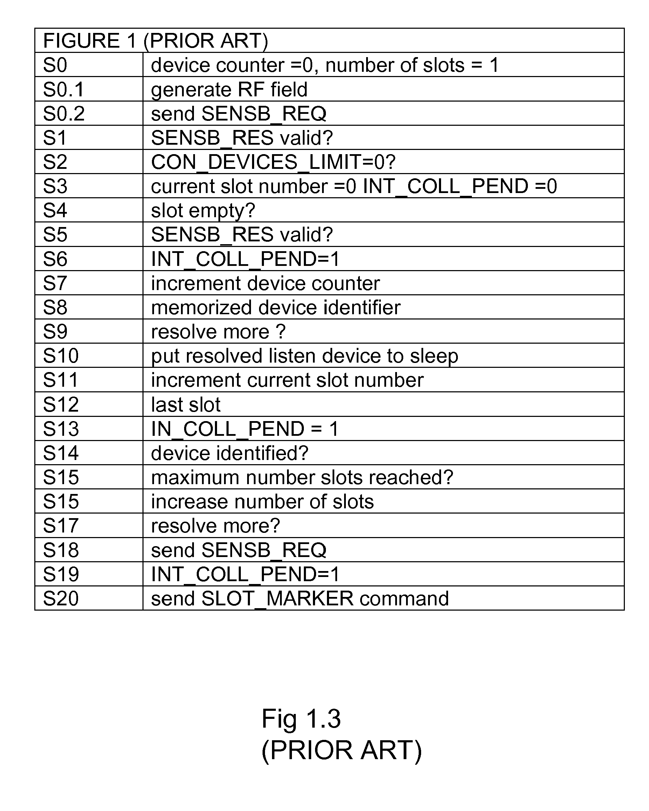

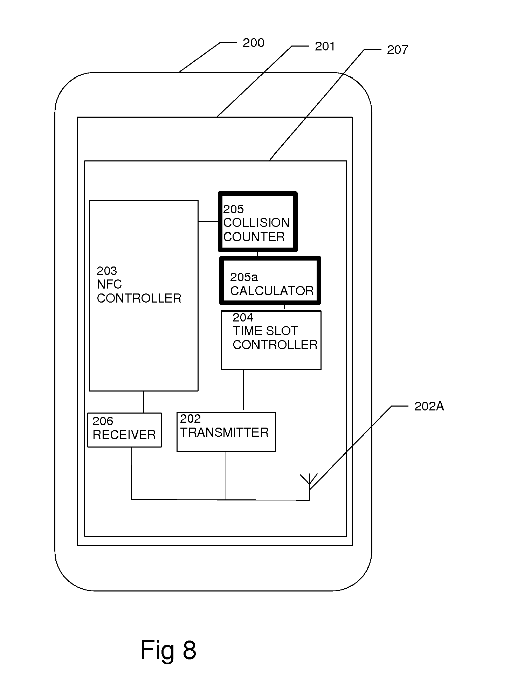

When an NFC enabled reader polls an NFC enabled smart device emulating several tags it is necessary for the reader to resolve every one of the tags. A procedure for achieving this with NFC-B technology tags is defined in ISO14443 and NFC Forum Technical Specification 1.0 Activity 2010-11-18. The prior art method is described with reference to the flow chart of Figure 1 and derived from Figure 8 of NFC Forum Technical Specification 1.0 Activity 2010-11-18 on page 68.

The reader device starts and at step S0 sets a device counter to 0. The NFC Forum Device must assign a parameter containing a number of time slots for receipt of an NFC-B poll response signal. The number is initially 1.

At step 0.1 the reader generates an RF field which will activate every NFC listen device (tag) within range. At step S0.2 the reader sends a poll request signal which is SENSB_REQ and specific to NFC-B technology tags. Only NFC-B tags will respond by sending a poll response signal in the 1^{st} time slot. The poll response signal is multi byte binary signal including the unique identifier (NFCID0) of each NFC-B tag. Because several tags are present in the field this will result in bit level collision occurring in the poll response (SENSB_RES) received in time slot 1. This will invalidate the poll response received so at the next step S1 the method will go to step S2 where a predetermined device resolution limit value (CON_DEVICES_LIMIT) is compared with the number of devices (presently 0) resolved this is not exceeded. So the method goes to step S3 where the current slot number is set to 0 and a collision flag (INT_COLL_PEND) is reset to 0 to indicate no collisions.

The slot 1 is not empty at step S4 and the poll response is not found valid at subsequent step S5 so that the method goes to step S6 where the collision flag is set to 1 to indicate a collision. The method goes to step S11 to increment the current slot number to 2. At step S12 the current slot number is compared to the number of slots. In this case the current slot number is 2 and exceeds the number of slots set at S0 (N=1) the method therefore goes to step S13 where the collision flag is set so the method goes to step S14 where the device is not identified so the method goes to step S15. At S15 the number of slots N is compared with a predetermined maximum number of slots allowed and if not equalled goes to step S16 where the number of slots is increased. The increase in the number of slots is specified in NFC Technology TS Digital page 54 Table 24 and will be one of 2, 4, 8 or 16. In this case it will be 2.

When the number of slots has been increased the poll request SENSB_REQ is sent again at step S18. All unidentified tags will again randomly select one of the two time slots in which to send its poll response. For this example we shall assume four present tags respond one into slot #1. Slot #1 commences immediately after transmission of the poll request. The transmission of the poll request signal indicates the start of a new resolution cycle.

The method goes from step S18 to step S3 where the current slot number is set to zero and the collision flag is set to null (0). The slot is not empty at step S4 so the method proceeds to step S5.

The poll response SENSB_RES will be valid at step S5 so the device counter will be incremented to 1 at step S7 and the device identifier NFCID0 recorded at step S8. At step S9 the device counter (1) is compared to the devices limit INT_COLL_PEND, which is usually 5. Because the limit is not reached the method will choose to resolve more so the read device sends the sleep command using the recovered NFCID0 of the identified tag at step S10. The identified (resolved) tag goes to sleep, a state unresponsive to the poll request signal.

The current slot number is incremented to 2 at next step S11. This is not the last slot, so a slot marker command is sent and the tags which randomly chose slot 2 will send their poll response signal SENSB_RES into time slot 2. Consequently the method will find slot 2 occupied when it goes to step S4. However, because each of the remaining three unresolved tags will respond to the slot marker there will be a collision in slot #2.

Because of collision, the poll response in slot 2 will be invalid at step S5 so that the collision flag will be set to 1 by the step S6.

From step S6 the method goes to step S11 where the slot number is incremented to 3 which is not found to exceed the last slot at step 12. The method therefore goes to step 13 where the collision flag set to 1 moves the method to step 14. The device cannot be identified because of the collision so the method goes to step 15. At step 15 the maximum number of slots (16 according to the NFC specification) is not reached so the method goes to step 16 to increase the number of slots N to 4. The increase in the number of slots is a sequence predetermined according to the NFC forum as 1,2,4,8 and finally 16.

The method goes from step S15 to send the poll request at step S18 and returns to step S3. The remaining three tags which are not asleep will randomly select one of the four time slots provided in resolution cycle three in which to respond.

In the next (3^{rd}) cycle no tag selects slot one, one tag selects slot 2 and two tags select slot 4 leaving slots 1 and 3 vacant.

The method will initially step through to slot 2 where the tag identity NFCID0 will be recorded as explained above, the method will then step through again to the 4^{th} slot where a collision is identified and the method will progress to step S16. There are still two unresolved tags at this stage and it is still possible that a collision will occur leading to a further cycle with the number of slots increased to the limit 16.

Each time slot must be inspected on every cycle of this prior art method and the number of time slots can quickly increase to the maximum where it will exit the resolution process with unresolved tags.

NFC Technical Specification Activities says at 9.3.5.18 "Symbol 17 [resolve more]: If the device counter is lower than the CON_DEVICES_LIMIT, then the NFC Forum Device MUST proceed to Symbol 18 [increase the number of slots]. Otherwise, the NFC Forum Device MUST conclude the NFC-B Collision Resolution Activity." Consequently the collision resolution activity continues until the number of devices resolved reaches the arbitrarily set limit, even if all the devices in the field are resolved, or more devices remain to be resolved.

If the device limit is not exceeded at step 9 when the final NFC-B device in range is resolved, the method requires the final (e.g the fourth device) to be sent the sleep command and put to sleep. This is also contrary to the NFC Forum specification.

This solution may result in unpredictable behaviour causing interoperability and compliance issues.

The solution described does not necessarily result in the resolution of each SENSB_RES signal because any two or more tags may persistently, albeit randomly, continue to produce collisions.

The described solution violates the NFC-B polling protocol by concluding the NFC-B collision resolution process pre-maturely. For example, there are certain scenarios when the SLOT_MARKER command is not sent for all the timeslots which is a violation of the NFC-B standard.

### Statement of invention

According to a first aspect of the present invention there is provided an NFC-B reader having:
an NFC controller adapted to resolve a plurality of NFC-B listen devices by repeatedly running a resolution cycle commencing with the transmission of a poll request signal;
a time slot controller responsive to the controller to generate one or more time slots for the reception of a poll response signal from any NFC-B tag **characterised in that**;
a collision counter is arranged to count each time slot in which a collision occurs between poll response signals received in the same time slot; and
a calculator to calculate a number of time slots to provide in a subsequent resolution cycle in response to the number of collisions counted by the collision counter, whereby the number of time slots can both increase and decrease in subsequent resolution cycles.

Preferably the NFC controller repeats the resolution cycles until no collisions occur during a resolution cycle. The absence of collisions indicates that no NFC-B listen devices in the RF field remain to be resolved.

According to a second aspect of the present invention there is provided a method of controlling a reader device to resolve a plurality of NFC-B technology tags comprising the steps of:
setting a number of time slots in which to receive any poll response signal;
commencing a listen device resolution cycle by sending a poll request signal;
receiving a plurality of poll response signals into randomly selected ones of the time slots; characterised by
counting the number of time slots in which a poll response collision occurs;
calculating a subsequent number of time slots from the counted number of collisions, and setting the number of time slots for a subsequent listen device resolution cycle in accordance with the subsequent number of time slots whereby the number of time slots in a subsequent resolution cycle can both increase and decrease.

In the prior art process the number of time slots can only increase up to the maximum. According to the NFC technical Specifications the number of time slots in a subsequent collision cycle will be increased in the sequence 1, 2, 4, 8 and 16 based on any time slot collision being detected in a preceding collision resolution cycle. In the case of the present invention a preferred time slot calculation to be implemented by the calculator is two to the power of the number of time slots subject to a collision (N=2^{NoC}).

According to a third aspect of the present invention there is provided an NFC-B reader having:
a controller adapted to resolve a plurality of NFC-B listen devices by repeatedly running a resolution cycle commencing with the transmission of a poll request signal;
a time slot controller responsive to the NFC controller to generate one or more time slots for the reception of a poll response signal from any NFC-B tag a collision detector arranged to detect a collision between poll response signals received in the same time slot during a resolution cycle;
**characterised** in that the controller responds to the collision detector at the end of a collision resolution cycle to end the collision resolution.

According to a fourth aspect of the present invention there is provided a method of controlling a reader device to resolve a plurality of NFC-B technology tags comprising the steps of:
setting a number of time slots in which to receive any poll response signal;
commencing a listen device resolution cycle by sending a poll request signal;
receiving a plurality of poll response signals into randomly selected ones of the time slots; detecting any time slot in which a collision occurs and characterised by
ending the method when no collision occurs.

Preferably each time slot in which a collision occurs is detected and counted so that the number of time slots to be set in a subsequent collision resolution cycle can be calculated from the number of collisions detected in a preceding resolution cycle. When the number of collisions counted is zero all the NFC-B listen devices in range are resolved and the resolution method is ended.
A preferred calculation has the time slot controller providing time slots at two to the power of the number of collisions. Thus if the preceding cycle had two slots, with a collision in each slot the number of slots allocated to the next cycle would be four.

Time slots containing a single poll response signal are resolved. Preferably the reader sends a sleep command to a tag. The sleep command is preferably sent immediately after resolution. Preferably the final tag resolved is identified and kept active by holding the sleep command.

This invention puts the last resolved tag into sleep state when the number of counted collisions is greater than nil (0) (which means that still more tags need to be resolved) and/or when the current slot number is less than the total number of slots (N). The number of slots is advertised in the poll request signal. The sleep command (SLEEP) may be sent immediately after receiving the poll response from the corresponding NFC-B listen device (e.g. before sending a slot marker command or before sending the subsequent poll request command), or the sleep command may be sent after sending all the slot marker commands in a resolution cycle , i.e. before sending the subsequent poll request (SENSB_REQ) command.

An outcome of the reader and method is that each timeslot will receive a valid poll response in the last resolution cycle.

### Brief description of the drawings

An embodiment of an NFC reader adapted to resolve a plurality of NFC tags by the provision of a resolution sub-system, and a method of resolving a plurality of NFC tags, will now be described, by way of example only, with reference to the accompanying figures, wherein:
figure 2 is a flow chart illustrating a first implementation of the method;
figure 3 is a time slot chart of the method;
figure 4 is a first variant with the reader provided by a mobile phone and a plurality of stand-alone tags provided by cards or PICS;
figure 5 is a second variant with the reader implemented in a mobile phone and another mobile phone emulating a plurality of tags;
figure 6 is a third variant with the reader provided by a dedicated reader and a plurality of stand-alone tags provided by cards or PICS;
figure 7 is a fourth variant with the reader provided by a dedicated reader and a mobile phone emulating multiple tags; and
figure 8 is a diagram of the components of the card reader in a mobile phone.

### Detailed description of the drawings

The reader and method will be described by reference to implementation in a mobile phone. However the reader may be implemented in any device provided with the necessary hardware and software to implement the process, including at least; a dedicated tag reader, a tablet, personal digital assistant, security gate or turnstile. The invention may be implemented by code recorded in a memory of a reader device such as a mobile phone and executed in a controller provided by a mobile phone CPU. The invention may therefore be embodied in a package of code, recorded and configured for installation into the reader device memory. The package may be delivered for installation via any known means including at least: download over the internet, 2G, 3G, or 4G or other cellular phone network technology or media such as flash memory, CD or DVD.

The mobile phone 200 shown in figure 8 includes an NFC reader 201 which may consist of substantially conventional hardware components. The NFC reader incorporates an NFC resolution sub-system 207, including a transmitter 202, coupled to an antenna 202A to transmit a radio frequency signal as at step 2 or 102 and a poll signal (SENSB_REQ) as at step 3/105. The antenna will also be connected to a receiver to receive transmissions from tags (listen devices) such as the SENSB_RES. The transmitter, receiver and other components will be controlled by an NFC controller CPU 203 functioning in response to a set of instructions recorded in a memory (not shown) to implement the method by providing a time slot controller 204, a collision counter 205 and a calculator 205a.

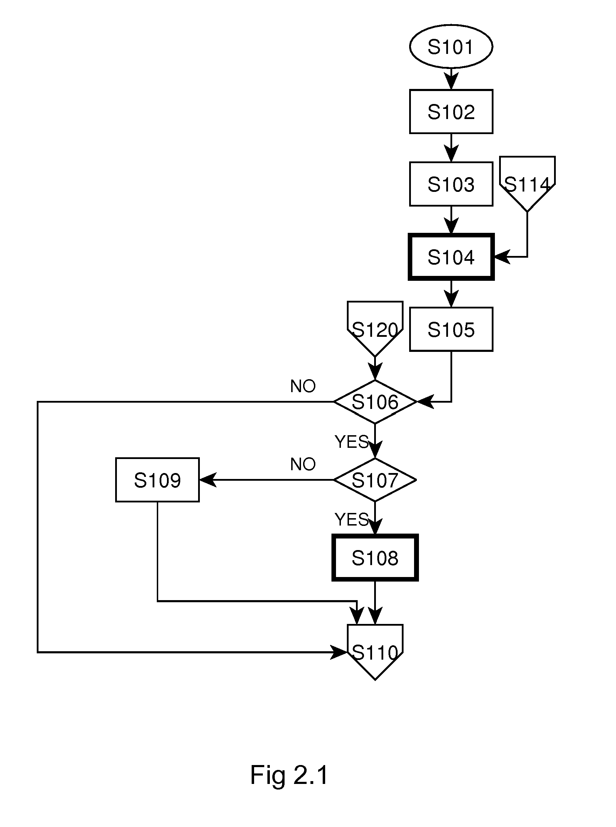

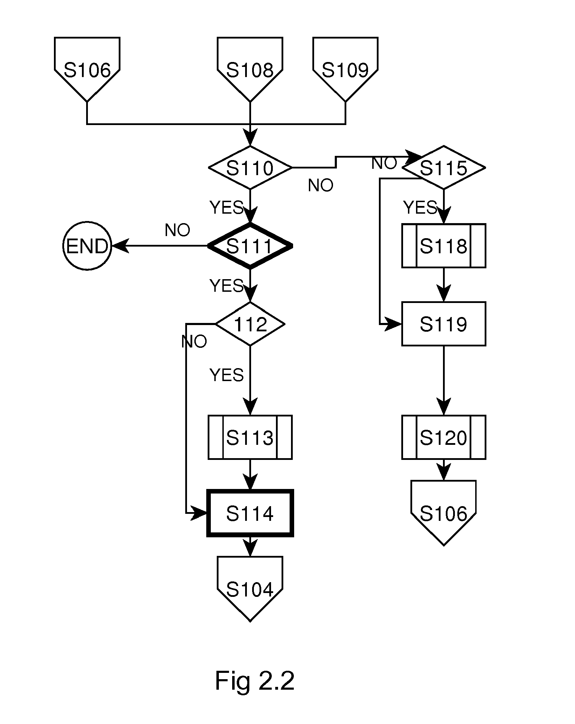

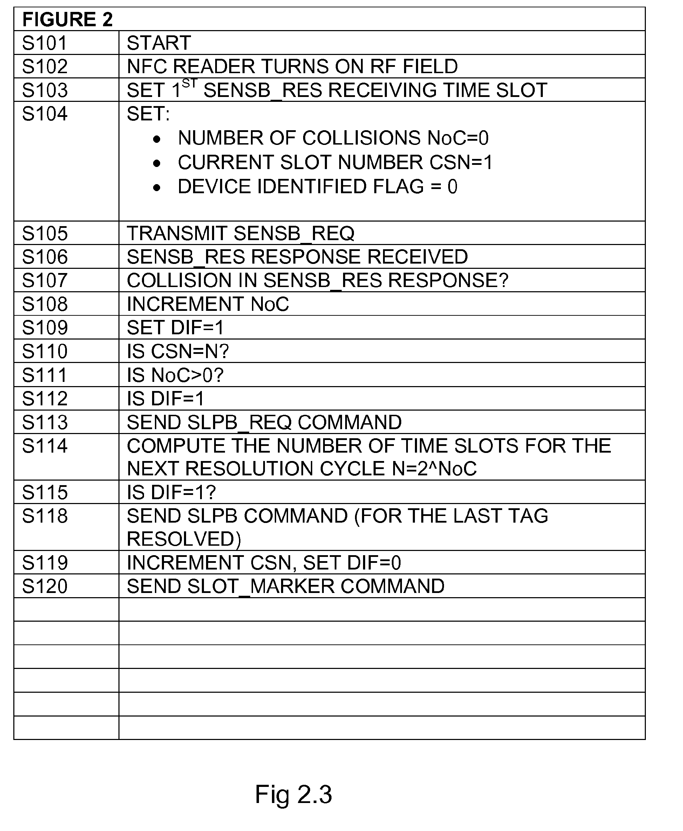

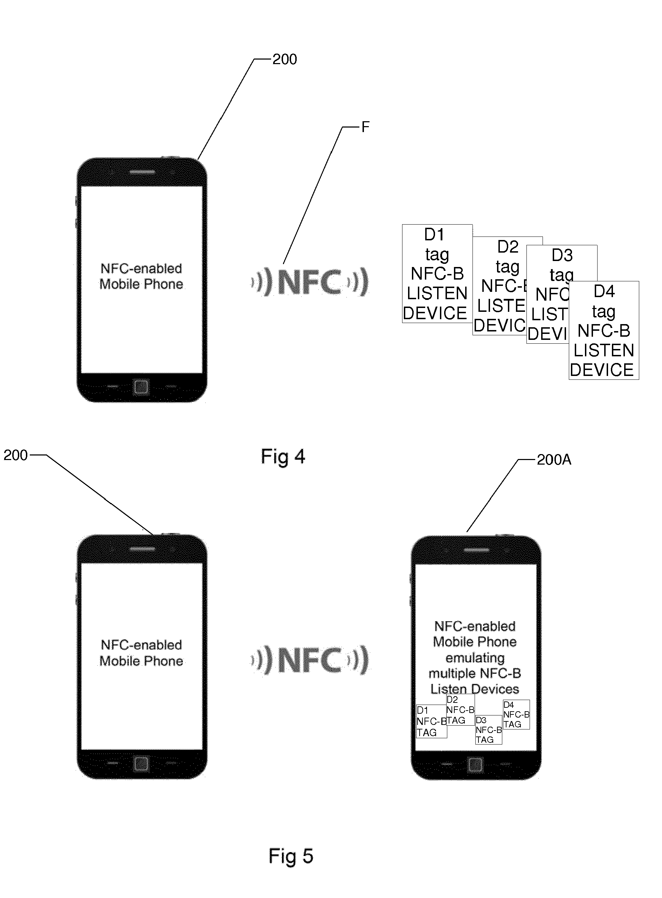

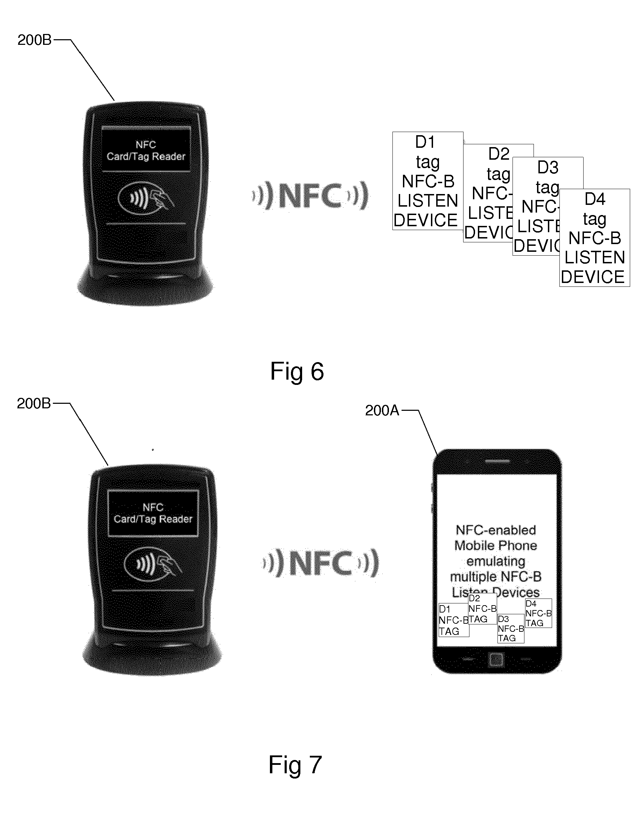

Referring to figure 2 the method starts at step 101 possibly in response to a manually implemented command. As in the prior art the NFC reader turns on the transmitter 202 to emit an RF field "F" at step 102. The RF field will turn on every tag D1, D2, D3 & D4 in range as illustrated in figures 4 or 6. While the example describes the resolution of four tags any number of tags may be resolved.

The tags illustrated in figures 4 and 6 are independent devices such as: a travel pass, credit card and door key. Where the listen device is another NFC enabled smart device such as a mobile phone 200A; each enabled emulation of an NFC tag will be turned on by receipt of the RF field. The variant of a dedicated NFC reader 200B will implement the reader method in the same way as the mobile phone.

The implementation described will be limited to NFC-B technology devices although implementation for other technologies is contemplated within the scope of this specification.

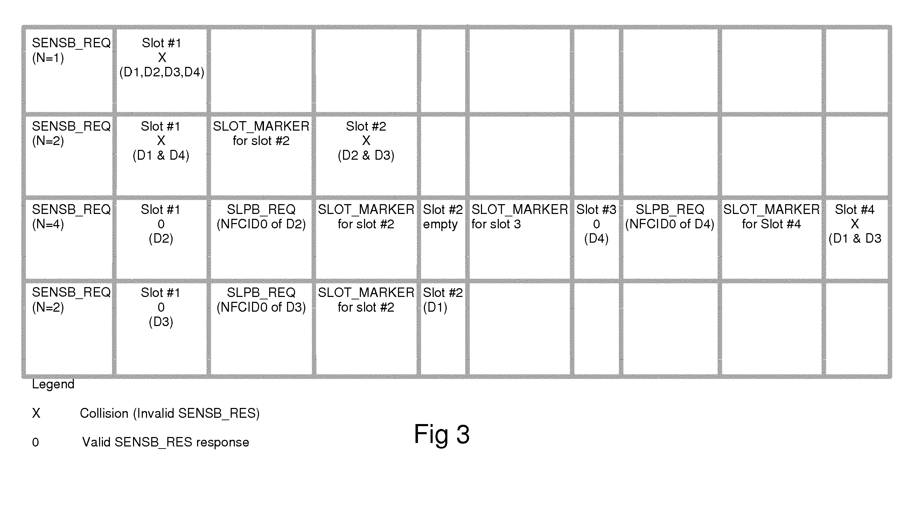

At step 103 the method sets a minimal number of time slots, in this case a single time slot,#1 in the first resolution cycle of figure 3. All poll response signals (SENSB_RES) from every type B technology tag in range will be transmitted to and received in slot#1. Each NFC-B tag can, in the absence of collision, be identified by a unique identification code NFCID0 which is sent as part of the poll response signal SENSB_RES.

The collision counter 205 includes a collision detector (not shown) which detects a collision between poll response signals in any time slot.

At step 104 the collision counter 205 is set to zero (NoC = 0). The collision counter counts the number of time slots in any one resolution cycle where a collision has occurred. The current time slot number (CSN) is set to 1 in the time slot controller 204. A device identified (resolved) flag (DIF) is set to 0.

At step 105 the transmitter sends the poll request signal (SENB_REQ) for technology type B NFC tags. Between step 105 and step 106 every type B technology tag D1 -D4, which receives the poll request signal SENSB_REQ, and is not subject to a sleep command (asleep), will transmit a poll response signal timed to be received in the first time slot (slot #1 in figure 3). When the slot timing has expired the method step 106 inspects time slot #1 for any received poll response signal SENSB_RES. If there is a poll response signal the method goes to step 107.

If only one tag has responded there will be no collisions in the poll response signal. This will generate a NO outcome at step 107 causing the method to set the device identified flag to 1 (DIF=1) indicating no collisions. The current slot number (CSN) will be one and equal to the number of slots (N) so the outcome of the method at step S110 will be positive and move to step 111.

At step 111 the number of collisions will be zero and the method will move to end without sending any sleep command so leaving the tag active.

In the case illustrated by figure 3 the method from S101 to S104 is as described above. However at step 106 four poll response signals here abbreviated to D1, D2, D3 and D4 are received simultaneously in time slot #1 during the first resolution cycle. A collision in one time slot is therefore detected at step 107 causing step 108 to increment the number of collisions NoC to 1. The current slot number in resolution cycle 1 is 1 and will equal the number of slots "N" set at step S103 so the method will go to step 111. At step 111 the number of collisions is greater than zero so the method will go to step 112.

Because there is a collision in the current slot SENSB_RES cannot be resolved and DIF will not equal 1 therefore the method will advance to step 114 where the number of time slots (N) for the next resolution cycle is computed by the calculator 205a in accordance with the formula:

N=2^{NoC}

or two to the power of the number of collisions detected in the instant resolution cycle. The method then goes to step S104, then step S105 and the start of a second resolution cycle.

At step 105 the poll request signal is resent, starting the second resolution cycle. The second resolution cycle includes the new number of slots "N" which will be two. Each NFC-B tag randomly selects one of the two time slots on receipt of the poll request, which specifies N=2. In this example tags D1 and D4 select time slot #1 and transmit the poll response accordingly to be received by the NFC receiver 206. At step S106 the presence of the poll response SENSB_RES in time slot #1 is detected and the method goes to step S107 where a collision is found in at least one of the bits of the received poll response. The method therefore goes to step S108 where the collision counter 205 increments NoC to 1 and moves to step S110.

The current slot number is 1 while the number of slots is 2 so at step 110 the decision is negative and the method goes to step 115. No devices are as yet identified so the device identified flag is still zero so that the decision at step 115 is negative driving the method directly to step 119. At step 119 the current slot number is incremented to 2 and the device identified flag will be set to 0. The method then advances to step S120.

At S120 the reader device is driven to send the slot marker command (SLOT_MARKER) for the second time slot (slot #2) via the transmitter 102. On receipt of the slot marker command the NFC-B tags D2 and D3 which have chosen slot 2 simultaneously send their poll response signals. The received signals are then found by the reader device at step S106.

The method is subsequently similar to the steps described above up to step S110 except the number of collisions will increment to 2. At step S110 the current slot number (CSN=2) is found to equal the number of slots (N=2). In consequence the method goes to step S111. At step S111 the number of collisions (NoC) is found to be 2 and greater than nil. Accordingly the method proceeds next to step S112. The device identified flag is not one and so, from step S112, the method advances to step S114.

At step S114 the number of slots is recalculated according to the number of collisions (NoC=2) by the formula N = 2² = 4. The method then advances to step S104, then to step S105 and the start of a third resolution cycle.

In the third resolution cycle the poll request signal is sent with four time slots N=4. Each of the four tags randomly selects a time slot, only D2 selects slot #1, the first time slot and sends its poll response signal for receipt into slot #1. At step S106 the received poll response SENSB_RES (D2) causes the method to advance to step S107 from S106. Because there is only one poll response received into slot #1 the method advances to step S109 from S107. At step S107 the device identified flag is switched to 1 indicating that a device has been identified. The tag ID (NFCID0) will be recorded in the reader device and the method advances to step S110.

At S110 the current slot number is 1 is not equal to the number of slots (4) so the method advances to step S115. At step S115 the device identified flag is 1 so the judgement is affirmative and the method goes to S118 where the NFC controller 203 drives the transmitter to send a sleep command to the just identified NFC-B tag. The sleep command (SLPB_REQ) is received by the resolved tag (D2) which becomes inactive, at least to further poll response signals. The reader device now advances to step S119 where the current slot number is incremented to 2 and the device identified flag reset to zero. The NFC controller 203 then drives the transmitter 202 to send the slot marker command for the second slot (slot #2).

The slot marker command for slot #2 is received by each of tags D1, D3 and D4. However, none of these tags chose slot #2. Tag D2 is inactive and therefore no tags respond in time slot #2. Accordingly, when the method moves to step S106, no poll response is found and the method advances to step S110.

At S110 the current slot number (N=2) is judged unequal to the number of slots (4) and the method advances to step S115.

At S115 the device identified flag is "0" so the method advances directly to step S119 where the current slot number is advanced to slot #3 and the device identified flag is not changed.

At the next step S120 the controller drives the transmitter to send the slot marker command for step #3. The tag D4 selected slot #3 and therefore responds with its poll response signal into time slot #3. Neither tag D1 nor tag D3 responds.

The method advances to step S106 where the method progresses through steps S107, S109, S110, S115, S118, S119 and S120 so that the identity of tag D4 is recorded, tag D4 receives the sleep command transmitted from the reader device, the current slot number is advanced to slot #4 and the slot marker command is sent for slot #4.

Each of tags D1 and D3 choose slot #4 and accordingly when the slot marker command is sent for slot #4 respond into the time slot with their poll response signals. A step S106 the poll response signals are received and the method goes to step S107 where the collision between the two different poll response signals sends the method to step 108. Here the number of collisions is advanced from zero to one. The method advances to step S110, where the current slot number (CSN=4) is found to equal the number of slots (N=4), consequently the method advances to step S111.

At step S111 the number of collisions exceeds zero (NoC=1) therefore the method advances to step S112 where the device identified flag is found not to be one (DIF=0). Accordingly the method advances to step S114 where the number of slots for the next resolution cycle is calculated from N=2¹=2. The method then advances to step S104, then the next (fourth) collision resolution cycle where the poll request signal for two time slots is sent at step S105.

Each of tags D2 and D4 are inactivated by the sleep command so only tags D1 and D3 randomly chose a time slot. In this example only tag D3 selects slot #1 and responds to the poll request in time slot #1. Step S106 will find a poll response received in the time slot and no collision will be detected by step S107 so that the device identifier for D3 can be recorded and the device identified flag set to one at step S109.

The method will advance past step S110 where the current slot number is 1 less than the number of slots (n=2) to step S118 where the NFC controller will drive the transmitter to send the sleep command using the last recorded NFCID0 from tag D3. Tag D3 will therefore be inactivated on receipt of the sleep command. The controller will then advance to step S119 where the current slot number is advanced to slot #2 and the transmitter 202 driven by the NFC controller to send the slot command for slot #2.

Tag D1 has chosen time slot #2 and therefore responds to the slot command for slot #2 by sending its poll response signal. The receipt of the poll response signal is found at step S106 which therefore advances the method to step S107. No collision will be found at step S107 so that the method advances to step S109 where the device identified flag is set to one and the method advances to step S110.

At step 110 the current slot number (CSN=2) is equal to the number of slots (N=2) therefore the method advances to step S111. The number of collisions is not greater than zero when the current slot number equals the number of slots so that the method ends. In this condition the last tag (tag D2) to be identified (resolved) is not sent the sleep command and will remain active.

This method of NFC-B technology tag resolution is without a step to count the number of devices resolved. This method does not have a step to compare the number of devices resolved to a device limit such as CON_DEVICES_LIMIT in order to end the method.

## Claims

1. An NFC reader adapted to resolve a plurality of NFC tags (D1-D4) comprising:
an NFC controller (203) to control a time slot controller (204) an NFC transmitter (202) and an NFC receiver (206) in accordance with machine readable code recorded in a memory;
the time slot controller (204) being responsive to the NFC controller (203) to set a sequence of one or more time slots in which to receive a poll response signal from any NFC-B tag (D1-D4),
the transmitter (202) arranged to send a poll request signal or a time slot command to provoke a poll response signal from any NFC-B tag in range;
wherein the time slot controller (204) is responsive to the NFC controller (203) so that in a first resolution cycle only a minimal number of time slots is set, to receive all poll response signals in response to transmission of a first poll request signal,
**characterised in that**
a collision counter (205) is arranged to count each time slot in which a collision occurs during any one collision resolution cycle; and **in that** a calculator (205a) is arranged to respond to the collision counter (205) to calculate a number of time slots (N) for a subsequent collision cycle so that the number of time slots can either increase or decrease.

2. An NFC reader according to claim 1 wherein the calculator (205a) is arranged to calculate the number of time slots (N) as two to the power of the number of collisions (NoC) counted.

3. An NFC reader according to claim 1 or claim 2 wherein the minimal number is one.

4. An NFC reader according to claim 1 wherein the controller (203) is arranged to repeat poll resolution cycles until no more poll response signals remain to be resolved.

5. An NFC reader according to any one of the preceding claims which is not responsive to a device resolution limiter to end the resolution method.

6. An NFC reader according to claim 5 wherein the NFC controller (203) is responsive to a collision count of zero (NoC=0) and the current time slot number (CSN) equalling the number of time slots (N) set by the time slot controller (204), to end.

7. An NFC reader according to any one of the preceding claims wherein the transmitter (202) is responsive to the NFC controller (203) on the occasion of the resolution of an NFC-B tag to transmit a sleep command to the resolved NFC-B tag.

8. An NFC reader according to claim 7 wherein the NFC controller (203) is responsive to the collision counter reporting a collision count exceeding zero, or a current slot number (CSN) less than the number of slots (N), to drive the transmitter (202) to send a sleep command to a resolved tag.

9. A method of resolving a plurality of NFC tags (D1-D4) comprising the steps of :
(i) setting a minimal number of time slots (N);
(ii) transmitting a poll request signal to start a resolution cycle;
(iii) receiving every poll response signal in the set time slot or slots; **characterised by**
(iv) counting each time slot (NoC) in which a poll response signal collision is found;
(v) setting a number of time slots (N) in a subsequent resolution cycle in accordance with the number of time slot collisions counted, and reapeating steps (ii) to (v) whereby the number of time slots in the subsequent collision resolution cycle can either increase or decrease.

10. A method according to claim 9 wherein the number of time slots (N) in each subsequent cycle is set to two to the power of the number of collisions (NoC) counted in the preceding resolution cycle.

11. A method according to claim 9 or 10 wherein the minimal number of time slots is one.

12. A method according to any one of claims 9 to 11 wherein steps (ii) to (v) are repeated until all NFC-B tags in range are resolved.

13. A method according to any one of claims 9 to 12 wherein there is no step of comparing the number of devices resolved to a device limit to end the method.

14. A method according to any one of claims 9 to 13 wherein the resolution of the last unresolved tag in range is determined when the number of collisions counted (NoC) in a resolution cycle is zero and the current time slot number (CSN) equals the number of time slots (N).

15. A method according to any one of claims 9 to 14 wherein a sleep command is transmitted to each resolved tag immediately after resolution, except for the last resolved tag.

16. A method according to claim 15 wherein a sleep command is transmitted to a resolved tag during a resolution cycle when the number of collisions counted is greater than zero (NoC>0) or the current slot number is less than the number of slots (CSN<N).

17. An NFC reader adapted to resolve a plurality of NFC tags (D1-D4) having:
an NFC controller (203) responsive to machine readable code recorded in a memory to resolve a plurality of NFC-B listen devices by repeatedly running a resolution cycle commencing with the transmission of a poll request signal;
a time slot controller (204) responsive to the NFC controller (203) to generate a number of sequential time slots (N) for the reception of a poll response signal from any NFC-B tag in range; **characterised in that** the reader has a collision detector arranged to detect each time slot in which a collision occurs between poll response signals received in the same time slot during a resolution cycle;
the NFC controller (203) responds to the collision detector indicataing the absence of any collision at the end of a collision resolution cycle to end the collision resolution.

18. An NFC -B reader according to claim 17 wherein the collision detector is a component of a collision counter (205) and the NFC controller (203) determines the absence of any collisions when the number of collisions at the end of a device resolution cycle is zero (NoC=0).

19. An NFC-B reader according to claim 17 or 18 wherein the NFC controller (203) is responsive to the equality of the current slot number (CSN) and the number of time slots (N) to determine the end of a collision resolution cycle.

20. A method of resolving a plurality of NFC tags (D1-D4) comprising the steps of :
(i) setting a minimal number of time slots (N),;
(ii) transmitting a poll request signal to start a resolution cycle;
(iii) receiving every poll response signal in the set time slot or slots;
(iv) detecting each time slot in which a poll response signal collision is found;
**characterised by**
(v) determining that every tag in range is resolved when, at the end of a poll resolution cycle, no collisions have been detected.

21. A method according to claim 20 wherein each detected collision is counted in every poll resolution cycle.

22. A method according to either of claims 20 or 21 wherein the end of a device resolution cycle is determined by the equality of the current slot number (CSN) and the number of slots (N).

## Amended claims

### Amended claims in accordance with Rule 137(2) EPC.

**1.** An NFC reader adapted to resolve a plurality of NFC-B tags (D1-D4) comprising:
an NFC controller (203) to control a time slot controller (204) an NFC transmitter (202) and an NFC receiver (206) in accordance with machine readable code recorded in a memory;
the time slot controller (204) being responsive to the NFC controller (203) to set a sequence of one or more time slots in which to receive a poll response signal from any NFC-B tag (D1-D4),
the transmitter (202) arranged to send a poll request signal or a time slot command to provoke a poll response signal from any NFC-B tag in range;
wherein the time slot controller (204) is responsive to the NFC controller (203) so that in a first resolution cycle only a minimal number of time slots is set, to receive all poll response signals in response to transmission of a first poll request signal,
**characterised in that**
a collision counter (205) is arranged to count each time slot in which a collision occurs during any one collision resolution cycle; and **in that** a calculator (205a) is arranged to respond to the collision counter (205) to calculate a number of time slots (N) for a subsequent collision cycle so that the number of time slots can either increase or decrease.

**2.** An NFC reader according to claim 1 wherein the calculator (205a) is arranged to calculate the number of time slots (N) as two to the power of the number of collisions (NoC) counted.

**3.** An NFC reader according to claim 1 or claim 2 wherein the minimal number is one.

**4.** An NFC reader according to claim 1 wherein the controller (203) is arranged to repeat poll resolution cycles until no more poll response signals remain to be resolved.

**5.** An NFC reader according to any one of the preceding claims which is not responsive to a device resolution limiter to end the resolution method.

**6.** An NFC reader according to claim 5 wherein the NFC controller (203) is responsive to a collision count of zero (NoC=0) and the current time slot number (CSN) equalling the number of time slots (N) set by the time slot controller (204), to end.

**7.** An NFC reader according to any one of the preceding claims wherein the transmitter (202) is responsive to the NFC controller (203) on the occasion of the resolution of an NFC-B tag to transmit a sleep command to the resolved NFC-B tag.

**8.** An NFC reader according to claim 7 wherein the NFC controller (203) is responsive to the collision counter reporting a collision count exceeding zero, or a current slot number (CSN) less than the number of slots (N), to drive the transmitter (202) to send a sleep command to a resolved tag.

**9.** A method of resolving a plurality of NFC-B tags (D1-D4) comprising the steps of :
(i) setting a minimal number of time slots (N);
(ii) transmitting a poll request signal to start a resolution cycle;
(iii) receiving every poll response signal in the set time slot or slots; **characterised by**
(iv) counting each time slot (NoC) in which a poll response signal collision is found;
(v) setting a number of time slots (N) in a subsequent resolution cycle in accordance with the number of time slot collisions counted, and repeating steps (ii) to (v) whereby the number of time slots in the subsequent collision resolution cycle can either increase or decrease.

**10.** A method according to claim 9 wherein the number of time slots (N) in each subsequent cycle is set to two to the power of the number of collisions (NoC) counted in the preceding resolution cycle.

**11.** A method according to claim 9 or 10 wherein the minimal number of time slots is one.

**12.** A method according to any one of claims 9 to 11 wherein steps (ii) to (v) are repeated until all NFC-B tags in range are resolved.

**13.** A method according to any one of claims 9 to 12 wherein there is no step of comparing the number of devices resolved to a device limit to end the method.

**14.** A method according to any one of claims 9 to 13 wherein the resolution of the last unresolved tag in range is determined when the number of collisions counted (NoC) in a resolution cycle is zero and the current time slot number (CSN) equals the number of time slots (N).

**15.** A method according to any one of claims 9 to 14 wherein a sleep command is transmitted to each resolved tag immediately after resolution, except for the last resolved tag.

**16.** A method according to claim 15 wherein a sleep command is transmitted to a resolved tag during a resolution cycle when the number of collisions counted is greater than zero (NoC>0) or the current slot number is less than the number of slots (CSN<N).
